# EUROPEAN PATENT APPLICATION

(11) **EP 3 663 124 A1**
(43) Date of publication of application: **10.06.2020**
(21) Application number: 19188833.8
(22) Date of filing: 29.07.2019
(51) Int. Cl.: B60L 53/60

(54) **SYSTEM AND METHOD FOR CONTROLLING CHARGING OF AN ELECTRIC ENERGY STORAGE SYSTEM OF AN ELECTRIC VEHICLE**

(30) Priority: 07.12.2018 US 201816214020; 07.12.2018 US 201816214028
(71) Applicant: Watson, David Timothy Patrick, London SW11 6 DR (GB)
(72) Inventor: Watson, David Timothy Patrick, London SW11 6 DR (GB)
(74) Representative: Becker & Kurig Partnerschaft Patentanwälte PartmbB

(57) **Abstract**

A system and method of operating a system for controlling charging of a battery of a user's electric vehicle from a power source is based upon intervening in a controlled manner between the power source and the electric vehicle and dynamically controlling a level for charging of the vehicle's electric energy storage system. The level potentially being different from a maximum available charging power from the power source. The controlled intervention occurs in accordance with a charging schedule determined by the server and transmitted by the server to the charging cable. The charging cable then operates according to the charging schedule resulting in a corresponding controlled charging of the vehicle's electric energy storage system.

## Description

### BACKGROUND OF THE INVENTION

### Field of the Invention

The present disclosure relates to a system and method for controlling charging of an electric energy storage system of an electric vehicle.

### Description of the Related Art

Charging electric vehicles entails numerous problems including accessing different power sources; providing a safe and effective charge to the electric vehicle; and arranging to have the electric vehicle sufficiently charged at a given point in time.

There are a variety of different power sources in existence that may be used to charge an electric vehicle. While a common source may be the typical domestic wall socket, after-market enhancements are available to increase the power delivery of the domestic socket. Commercial charging stations are becoming increasingly popular in public spaces, such charging stations being capable of delivering higher amounts of power than the standard domestic socket thereby decreasing the required amount of charging time to return the electric vehicle to full power. Both domestic and commercial power outlets or sockets tend to have a variety of plugs determined by technical, national and international conventions.

Coinciding with the increased popularity of electric vehicles is the increased diversity of their respective proprietary equipment, including the charging cable. Modern electric vehicle charging cables must be capable of interacting with the variety of charging sources, both by way of safely and sufficiently transmitting a charge from source to electric vehicle and by way of physical connectivity, namely, having an appropriate plug for the respective socket.

Electric vehicles may comprise a variety of different electric energy storage systems, sometimes referred to as batteries or accumulators, and supporting electronics complicating the charging process and potentially leaving a user confused as to when to charge and for how long. Typically, the electric vehicle user will plug his/her vehicle in and leave it to charge overnight even though such a charge duration may not be necessary or adequate, available or convenient, and/or appropriate for the longevity of the electric energy storage system. Further still, were a large number of electric vehicles be plugged into a local electric grid at relatively the same time, the load placed on the local electric grid may become overwhelming for the infrastructure resulting in power disruptions, equipment failure and safety hazards.

Solutions proposed for the aforementioned include enhancing the technical capabilities of the charging cable by adding certain enhancements to the cable. For example, to facilitate access to the various power sockets, electric vehicle charging cables may include an adaptor in the form of a cable portion having a first plug at one end that connects to the rest of the charging cable and a second plug at the other end of the adaptor specially configured to fit a power outlet or socket.

Certain problems remain with the charging cable including how to ensure end-to-end power and information connectivity, how to ensure electricity is delivered safely from socket to electric vehicle (EV) and how to effectively manage and control the delivery of electricity to meet the user's particular charging needs.

Some solutions have been proposed in the art. For example, US Patent 8,085,034 B2 proposes a system and method for managing the electric charging of vehicles wherein a number of charging points are centrally managed. Electric vehicles coupled to a charging point are put into direct communication with a central server which effects-controlled distribution of electricity over the charging points based upon electric vehicle priority and charging allotment. This innovation is limited to the individual electric vehicle's communication capabilities and the number of available charging points that are part of the centrally managed system.

US 2018/0001776 proposes a charging cable having an in-cable control box housing two communication modules, a processor and memory. One communication module extracts electric vehicle information directly from the electric vehicle via power line communication and the second communication module communicates via Wi-Fi to a supply equipment communication controller which effects the charging of the electric vehicle. The information communicated to the supply equipment communication controller includes maximum charging power of the electric vehicle, duration of charging requested and (upon completion) a request for billing. KR101197552 (B1) proposes a similar arrangement and CN205160153 is directed to including wireless communication in the control box for communication between the electric vehicle and remote sources. DE102009025302 (B4) is concerned with exchanging information between an electric vehicle and a central server for effecting detailed billing and the like. While these innovations are concerned with making sufficiently available power for charging the electric vehicle at a maximum charging rate over a sufficient amount of time to reach a particular electric vehicle battery charge level, other future oriented solutions would be desirable in the art as when the uptake of electrical vehicles becomes more widespread, conventional cables may become insufficient or inconvenient.

In addition to such considerations relating to the ease and convenience of using charging cables, local electrical power grids may be challenged by the increased popularity of electric vehicles. The conventional power grid with few large central power stations may over time be superseded by a power grid with which numerous smaller energy suppliers are decentrally connected. The tasks to be solved by operators of modern power grids are as a result far more complex. The supply of renewable energy by energy suppliers, who utilize wind and solar energy, is in some cases plannable only to a limited extent and is subject to substantial fluctuations.

In order to keep the supply of electrical energy delivered by power stations in balance with the need for electrical energy and to help ensure stability and reliability of the power grid, energy suppliers and electricity users connected will require continuous monitoring. For that purpose, the load of the power grid can be monitored over time to determine times with higher loading. Based on the determined course of load, static electrical loads are switched off at critical time periods so that a load balance can be achieved over longer periods of time.

The connection and disconnection of loads is traditionally carried out by ripple control. In modern power grids, i.e., so-called 'smart grids', ripple control is supplemented by 'smart meters', which allow detection of the state of the power grid close in time to numerous mains junctions. The communication of the decentral measuring units or 'smart meters' with a central station is possibly carried out by way of a network operating according to Internet protocols. A method for short-cyclic data detection and control of measuring points in intelligent power grids that use smart metering or smart grid functions, is known, from WO 2012/055566 A2.

If a difference between the supply of and requirement for energy now arises, the regulating energy or regulating power made available by the energy suppliers is used in order to avoid collapse of the power grid in the case of increased need or an energy excess in the case of too-small demand. Compensation for the mentioned differences or fluctuations in the power grid is provided by means of the regulating energy.

The available regulating energy is divided into different categories. Regulating energy able to be called up within seconds is termed primary reserve. Regulating energy able to be called up within a minute is termed secondary reserve. Additionally, the regulating energy includes reserve components, which can be called up after a quarter of an hour (minute reserve) or after hours (hour reserve).

In the case of overloading of the power grid, positive regulating energy is stored in the power grid. If there is an energy excess, negative regulating energy is taken from the power grid. Power stations capable of regulation are used for the required adaptations of output, such as rapid-response gas-turbine power stations or pumped-storage power stations. It can be disadvantageous, however, that supply always takes place with a significant delay even with fast-start power stations. Moreover, energy from the primary reserve can be expensive.

The regulation of the power grid can be challenged even more by the demands of energy consumers, such as electric vehicles, which draw larger amounts of energy from the power grid. Whereas connection or disconnection of systems with low energy consumption is usually uniformly distributed due to the high number, or is plannable on the basis of experience, this is less likely, or not at all the case, with electric vehicles. Dynamic loads, such as electric vehicles, can relatively and strongly load the power grid, selectively at any time of day or time. To the extent that, for example, in a residential area a larger number of drivers return home with their electrical vehicles at night, e.g., after an evening event, when the power grid operator does not expect greater loads; several electric vehicles can coincidentally be simultaneously charged whereby a high loading is abruptly triggered. Although such a situation can be absorbed by the regulation technology of the power grid, expensive primary reserves may be required to provide compensation for these processes. The presence of larger energy consumers, such as electric vehicles, may require a high level of availability of the regulating capacities of the power grid, e.g., by providing expensive primary reserves.

### BRIEF SUMMARY OF THE INVENTION

Accordingly, embodiments of the technology described herein are provided to substantially obviate one or more of the problems arising out of the limitations and disadvantages of the related art in providing improved solutions for selectively and safely charging an electric vehicle from different power sources.

One aspect of the technology described herein relates to a method of operating a system for controlling charging of an electric energy storage system of a user's electric vehicle from a power source. The system includes a server and a charging cable having a communications module for wirelessly communicating with the server. In that method, a data signal transmitted by the charging cable is received at the server. The data signal includes a cable specification and location data indicating the location at which the charging cable is coupled to the power source. Information sources are accessed by the server to obtain circumstantial information. The circumstantial information includes at least electrical power grid information and calendar information associated with the user. A charging schedule is generated by the server based on the cable specification, the location data and the circumstantial information. The charging schedule is transmitted by the server to the communication module of the charging cable. The charging cable causes charging of the electric energy storage system according to the charging schedule.

Another aspect of the technology described herein relates to a system for controlling charging of an electric energy storage system of a user's electric vehicle from a power source. The system includes a server and a charging cable. The server includes a processor, a data storage system and a first communications module. The charging cable has a control box configured to set a predetermined power charge select limit for the electric vehicle, an adaptor arranged to connect the control box and the power source and a second communications module for wirelessly communicating with the server. The processor is configured to receive a data signal transmitted by the second communications module of the charging cable, wherein the data signal includes a cable specification and location data indicating the location at which the charging cable is coupled to the power source. In addition, the processor is configured to access at least one information source to obtain circumstantial information, wherein the circumstantial information includes at least electrical power grid information and calendar information associated with the user. Further, the processor is configured to generate a charging schedule based on the cable specification, the location data and the circumstantial information and to transmitting the charging schedule to the second communication module of the charging cable. The charging cable is configured to cause charging of the electric energy storage system according to the charging schedule.

The technology described herein not only improves the convenience of using charging cables, it also considers situation-specific or circumstantial information to optimize the charging process. From the perspective of the user the charging process is optimized because charging may take place at reduced or optimized cost, such as, in addition to financial considerations, battery degradation and carbon footprint. The charging process is also optimized from the perspective of the power grid operator because load balancing is improved.

As to the convenience of use, the technology described herein minimizes user actions, enabling essentially a plug-and-play feature. That is, all the user has to do is park the electric vehicle at charging site, e.g., at home or a public charging station (where identification may be required prior to a charging session) and connect the charging cable to the charging stating and the electric vehicle. The charging cable then controls the optimized charging based on the charging schedule.

In one embodiment, the server extracts an identifier unique to the charging cable from the cable specification. The identifier is associated with user-specific data and electric vehicle specific data. This allows identifying the charging and obtaining cable and vehicle specific information, again without user involvement.

Other information used for generating the charging schedule is similarly obtained by the server. For example, in one embodiment, by accessing a user calendar information, source calendar information is obtained, and by accessing an electric vehicle information, source information about the electric energy storage system is obtained. In one embodiment, by accessing a power grid information source, information about the electrical power grid is obtained, wherein the electrical
power grid information specifies a maximum current load based on the location information.

In one embodiment, the charging schedule sets a start time and ends at an end time for the charging session. The end time is based on the calendar information associated with the user. The charging schedule includes several time periods between the start time and the end time, each one of these time periods defining a specific charging power to be used during the respective time period. In one embodiment, the charging power may be zero during a time period, whereas the charging power may be at a maximum during another time period.

In one embodiment, the charging schedule is determined by applying a lowest-cost path finding algorithm. Applied to the technology described herein, the available time between the start time and the end time and a total amount of power needed for charging the electric energy storage system are determined. The needed power is based on information obtained from the electric vehicle information source, including a current state of charge of the electric energy storage system, a desired target state of charge and a capacity of the electric energy storage system. A maximum power that can be drawn for charging based on power grid information and electric vehicle information is determined. With that information, a plurality of power states is set at selected points in time between the start time and the end time. For each power state, transitions to neighboring power states are determined, and for each transition, detail costs are determined. Further, for each transition, the detail costs are converted to a weighted number. A minimum-cost path is determined and transformed into the charging schedule.

As situations and circumstances may change over time, the technology described herein adapts to such a change. In one embodiment, a new charging schedule is generated by the server when changing circumstantial information is detected during charging. The new charging schedule is transmitted by the server to the communication module of the charging cable. The charging cable causes charging of the electric energy storage system according to the new charging schedule. That is, the charging cable operates according to the charging schedule that was received last.

In one embodiment, the technology described herein allows using a proven protocol in the field of charging electric vehicles. For communications between the server and the charging cable an Open Charge Point Protocol (OCPP) is applied. That protocol has been specified originally for communications between charging stations and a central management system.

### BRIEF DESRIPTION OF THE SEVERAL VIEWS OF THE DRAWINGS

The accompanying drawings, which are incorporated in and constitute a part of this disclosure, illustrate exemplary embodiments and, together with the description, serve to explain the disclosed principles.
Fig. 1 is a schematic illustration of an exemplary system for controlling charging of an electric energy storage system of an electric vehicle;
Fig. 2 is a schematic flow diagram of one embodiment of a method for controlling charging of an electric energy storage system of an electric vehicle;
Fig. 3 is schematic illustration of one embodiment of a charging schedule;
Fig. 4 is a schematic flow diagram of another embodiment of a method for controlling charging of an electric energy storage system of an electric vehicle;
Fig. 5 is a schematic illustration of an exemplary approach for generating the charging schedule;
Fig. 6 is a schematic illustration of an excerpt from the illustration of Fig. 5;
Fig. 7 is a schematic flow diagram of one embodiment of a method for generating a charging schedule;
Fig. 8 is a schematic illustration of an in-cable control box of a charging cable;
Fig. 9 is a schematic illustration of a first arrangement for charging an electric energy storage system of an electric vehicle;
Fig. 10a is a schematic illustration of a second arrangement for charging an electric energy storage system of an electric vehicle;
Fig. 10b is a schematic illustration of the second arrangement for charging an electric energy storage system of an electric vehicle shown in Fig. 10a at a different switching state;
Fig. 11 is a schematic illustration of a third arrangement for charging an electric energy storage system of an electric vehicle;
Fig. 12a is a schematic illustration of a signal chart method for charging an electric energy storage system of an electric vehicle;
Fig. 12b is a schematic illustration of one embodiment of a method for charging an electric energy storage system of an electric vehicle in accordance with the second arrangement;
Fig. 12c is a schematic illustration of one embodiment of a method for charging an electric energy storage system of an electric vehicle in accordance with the first arrangement;
Fig. 13 is a schematic illustration of one embodiment of a method for charging an electric energy storage system of an electric vehicle in accordance with the first arrangement; and
Fig. 14 is a schematic illustration of one embodiment of a method for charging an electric energy storage system of an electric vehicle in accordance with the third arrangement.

### DETAILED DESCRIPTION OF THE INVENTION

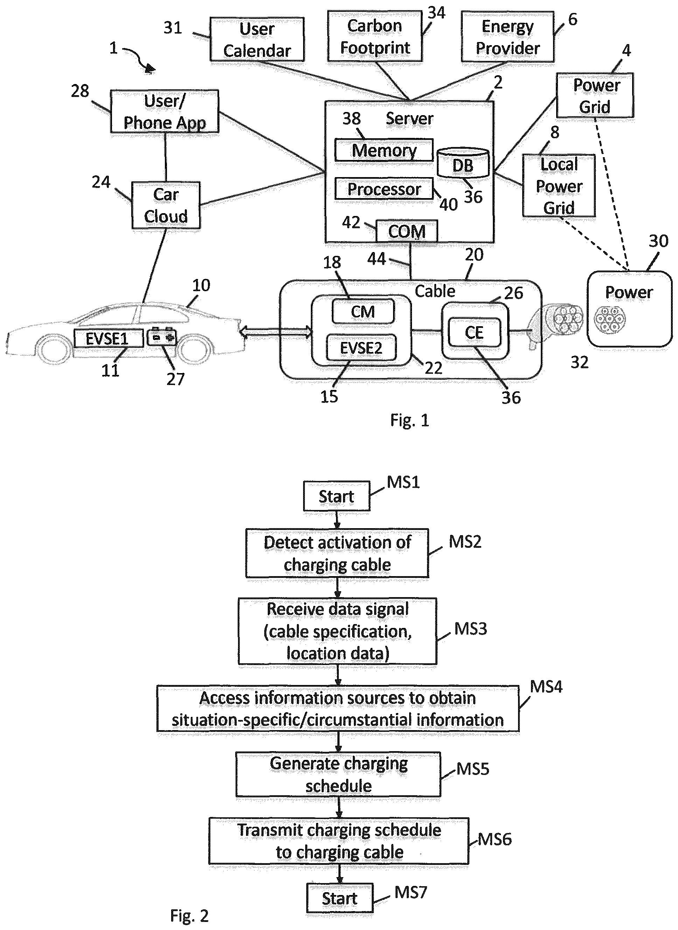

Fig. 1 is a schematic illustration of an exemplary system 1 for controlling charging of an electric energy storage system 27 of an electric vehicle 10. The illustrated system 1 includes a server 2 and a charging cable 20, which is shown to be at one end plugged in at a socket of the electric vehicle 10 and at the other end to a power source 30. That is, a user/owner of the electric vehicle 10 prepared the electric vehicle 10 for charging at a home location, or at a public or semi-public charging station. Accordingly, the power source 30 is located at one of these sites and coupled to a public and/or private power grid. The electric energy storage system 27 is sometimes referred to as a battery, battery cells, or an accumulator. The electric vehicle 10 includes a built-in electric vehicle supply equipment 11 (EVSE1) arranged to electronically interface between the electronic storage system 27 and the charging cable 20. Depending on a particular embodiment, the EVSE1 11 may be integrated together with the electronic storage system 27.

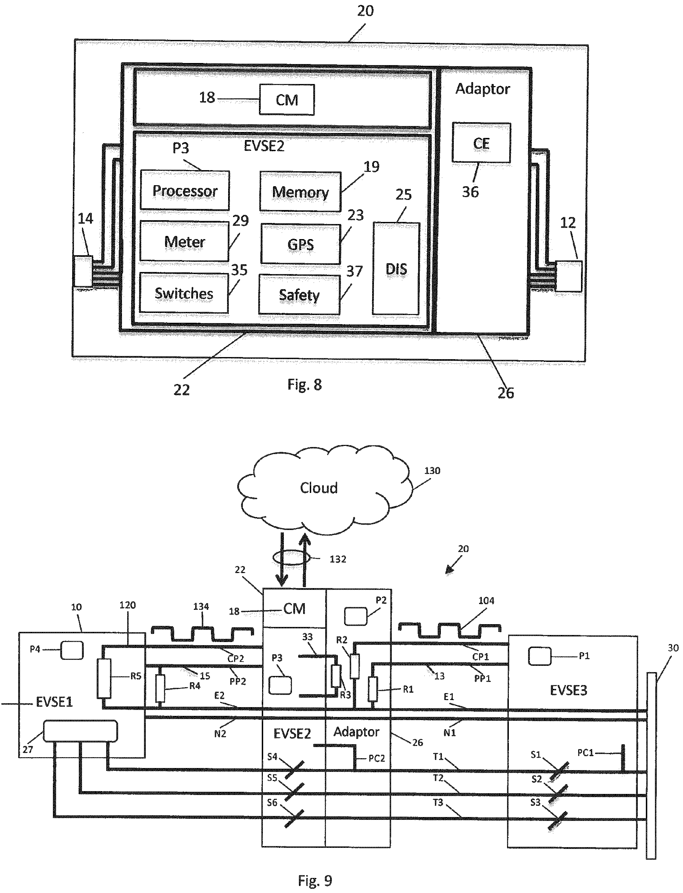

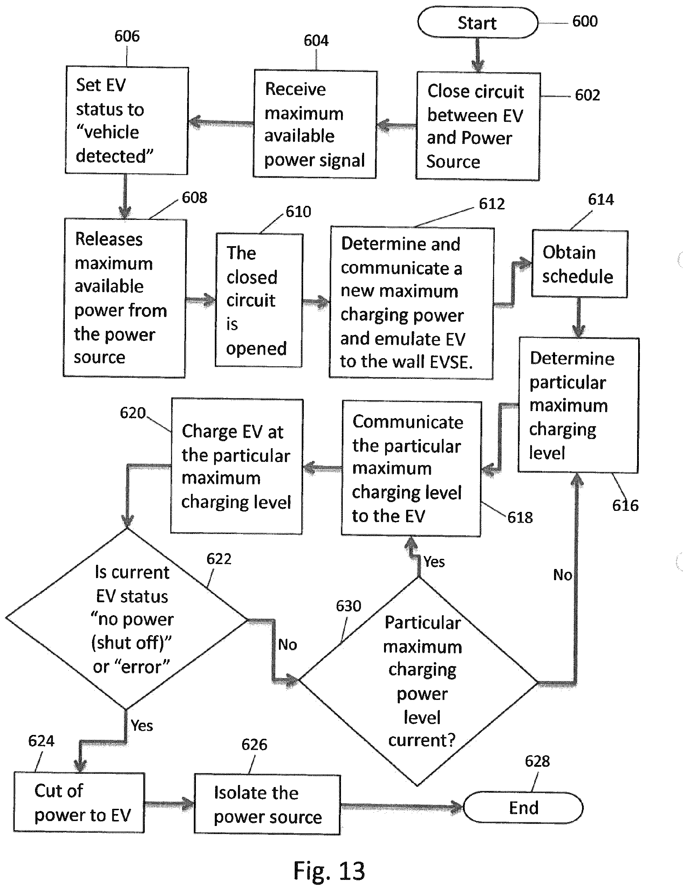

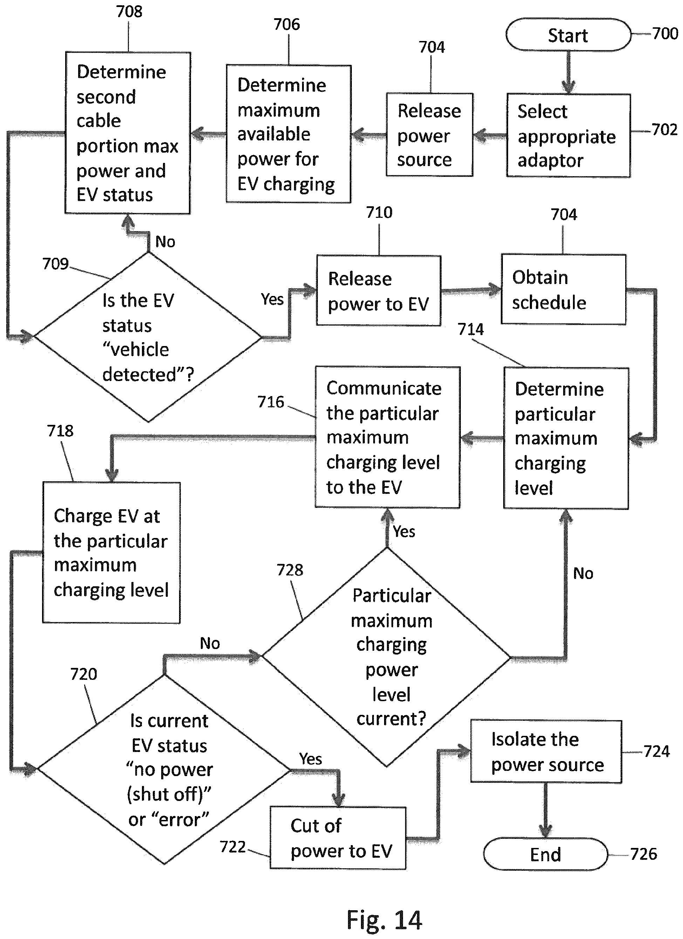

Referring initially to the system 1 as a whole and providing details of the charging cable 20 below with reference to Figs. 8-14, details of the server 2 and its operation within a certain environment and/or under certain circumstances are provided hereinafter. The server 2 is a cloud-based server and as such located remote from the electric vehicle 10, the charging cable 20 and the power source 30. Accordingly, the server 2 includes a processor 40 and communications equipment to transmit and receive data signals over a communications network 44, which may include a wire-based network and/or a wireless network. The communications may take place over the Internet according to an Internet Protocol. For illustrative purposes, the communications equipment is represented in Fig. 1 by a communications module (COM) 42 to provide for communications over the communications network 44. As described below in more detail, the charging cable 20 includes similar communications equipment, represented in Fig. 1 by a communications module CM (4G) 18 to provide for communications over the communications network 44.

Although Fig. 1 shows only one electric vehicle 10 and one charging cable 20, it is contemplated that the server 2 may be communicatively coupled to more than one charging cable 20 at any given time. Similarly, more than one charging cable 20 may be coupled to the power source 30, and more than one power supplies 30 may be provided at a certain site.

For illustrative purposes, Fig. 1 shows a plurality of information sources communicatively coupled to the server 2. These information sources include a (public) power grid information source 4, a local power grid information source 8, an energy provider information source 6, a carbon footprint information source 34, a user calendar information source 31, a user information source 28, and an electric vehicle information source 24, as described below in more detail. It is contemplated that these information sources may contain overlapping information and that some of them may be combined into one information source. Further, it is contemplated that in certain embodiments less, additional or different information sources may be used.

These information sources may be provided within the server 2, e. g., stored in a memory 38 or a database 36; the processor 40 may in one embodiment control access of the information sources. Some of these information sources may be external to and remote from the server 2 and accessible by the server 2 via application interfaces and/or communications interfaces. In one embodiment, the energy provider information source 6, the user calendar information source 31, the user information source 28 and the electric vehicle information source 24 may be at least partially implemented in the database 36. The user information source 28, for example, may include a plurality of user profiles, each identifying a registered user, the user's address and billing information; a user profile may be linked, for example, to the user's electric vehicle 10, the user's energy provider and the user's calendar. In one embodiment, the (public) power grid information source 4, the carbon footprint information source 34 and the electric vehicle information source 24 may be external to the server 2.

Briefly, the technology described herein is based upon the concept of intervening in a controlled manner between the power source 30 and the electric vehicle 10 and dynamically controlling a level for charging of the vehicle's electric energy storage system 27; the level potentially being different from a maximum available charging power from the power source 30. The controlled intervention occurs in accordance with a charging schedule determined by the server 2 and transmitted by the server 2 to the charging cable 20. The charging cable 20 then operates according to the charging schedule resulting in a corresponding controlled charging of the vehicle's electric energy storage system 27.

The charging schedule is generated in consideration of the information obtainable from one or more of the information sources. The content of each one of these information sources is described in the following:

Energy provider information source 6: For a certain geographical area, e.g., a country, a state, or one or more regions within a country or state, this source provides data identifying the energy providers that are licensed to provide electrical energy to customers, e.g., private, commercial or public customers, within the geographical area. The data may be broken down to city or street level. Certain streets or areas of a city may be served by one or more energy providers so that customers may choose one of them as their energy provider, tariff, costs, e.g., based on service quality, reliability and tariff structure. Further, the data stored in energy provider information source 6 identifies if an energy provider is an operator of a power grid within a geographical area.

Power grid information source 4: This source provides data about a structure of a power grid within a certain geographical area (e.g., a country or state). The power grid may be formed by several individual power grids. The structure of a power grid may be defined by a transmission system and a distribution system, which is the final stage in the delivery of electric power; it carries electricity from the transmission system to individual consumers. Distribution substations connect to the transmission system and lower the transmission voltage to medium voltage ranging between 2 kV and 35 kV with the use of transformers. Primary distribution lines carry this medium voltage power to distribution transformers located near the customer's premises. Distribution transformers again lower the voltage to the utilization voltage used by lighting, industrial equipment or household appliances. Often several customers are supplied from one transformer through secondary distribution lines. Commercial and residential customers are connected to the secondary distribution lines through service drops. The data specifies a maximum current load in the local neighborhood (local transformer that splits out to the houses in the street) and electric grid maximum in that area. Further, the data may include standard load profiles and statistically normalized average household power consumption during a day. It is contemplated that an energy provider uses such information to predict power consumption for energy generation planning.

Local power grid information source 8: This source provides data specifying if and what kind of local power grid is available within a certain area and/or at certain user/customer premises. For example, whether electric energy is available that is generated by photovoltaic system or wind-powered generators.

Carbon footprint information source 34: This source provides data specifying how electric energy available in a certain geographical area is generated, e.g., by conventional power plants (e.g., by nuclear or fossil energy (gas, oil or coal)) and/or by renewable/green energy (e.g., solar, wind, water). Generally, the more "green" energy is used, the smaller the so-called carbon footprint. For example, knowing where a user is located, the carbon footprint of the user's electricity tariff (conventional, green, or mixed) of the power grid overall can be obtained, for example, at the time of charging.

User calendar information source 31: This source provides data specifying a user's itinerary for a specified time period. This allows identifying the times a user needs the car, e.g., on weekdays a fully charged car is needed at 8:00 AM. But if there is a calendar entry for an appointment at 7:00 AM, the system 1 may have the car charged at 6:00 AM. Similarly, if a calendar entry indicates only short-distance car use on a specific day, a fully charged car may not be required.

User information source 28: This source provides data relating to users. Each user may set up a user account, as described below in more detail. Hence, for each user, the data includes personal data (e.g., address, billing information and mobile phone information), energy provider data, local power grid data and car-related data, such as kind of car and an ID code of the charging cable 20 used by the user. In one embodiment, the user's mobile phone runs an application specific software program (referred to as "App") dedicated to the electric vehicle 10, its operation and energy management. Depending on a particular embodiment, the mobile phone allows the App to communicate with communications equipment of the electric vehicle 10. The vehicle's communications capability may be referred to as "car cloud."

Electric vehicle information source 24: This source provides data including static car information, such as kind of car, battery size (capacity), maximum charging rate, i.e., how fast it can charge, car efficiency (used for calculating expected range of the car), operating efficiency (kilowatt hours (kWh) consumed per 100 km/miles driven), and charging efficiency. The source may further provide dynamic car information, such as current state of charge of the battery 27. In one embodiment, the dynamic car information may be obtained by the server 2 communicating with the communications equipment of the electric vehicle 10, e.g., using a mobile phone communications technology. In another embodiment, the dynamic car information may be obtained by the server 2 communicating with the user's mobile phone. Further, car information may be obtained by connecting to the vehicle manufacturer cloud which may have this information and/or installing a separate hardware module in the electric vehicle 10 that can read this information and transmit it directly to the cloud-based server.

With the understanding of the general structure of the system 1, its components and their functionalities, the operation of the system 1 is described with reference to Fig. 2. Fig. 2 is a schematic flow diagram of one embodiment of a method for controlling charging of the electric energy storage system 27 of the electric vehicle 10. In that embodiment, it is assumed that the user parked the electric vehicle 10 within cable-length reach of the power source 30, either at a home, semi-public or public site. If not at a home site, it is assumed that the power source 30 is ready for use, either because the user provided some kind of identification and/or billing information, or because charging is free at that power source 30. The method begins at a step MS1 and ends at a step MS7.

In a step MS2, activation of the charging cable 20 is detected. In one embodiment, the charging cable 20 is activated after being coupled to the (ready-for-use) power source 30. As the charging cable 20 in this embodiment does not contain its own power source, the power source 30 provides electric energy to the charging cable 20. Once powered-up, the cable's communications module 18 generates an activation signal and emits the activation signal as a radio frequency (RF) signal. The communications module 18 may include a SIM card and be configured to emit the activation signal according to the 4G mobile communications standard. The server 2 receives the activation signal via its communications module 42.

In one embodiment, communications between the server 2 and the charging cable 20 take place according to an application protocol, for example, the Open Charge Point Protocol (OCPP). That protocol is specified for communications between charging stations and a central management system but used according to the technology described herein for communications between the server 2 and the charging cable 20. It is contemplated that other protocols may be applied, e.g., proprietary protocols.

Proceeding to step MS3, a data signal is received. The data signal is transmitted by the cable's communications module 18 and received by the server's communications module 42. The data signal comprises an identifier that is unique to the charging cable 20. The identifier allows the server 2 to search the database 36 for a user profile that is associated with the identifier. The user profile includes, for example, a specification of the charging cable 20 (e.g., maximum current) assuming the user is using his/her currently known cable with other cables in use being possible with the addition that the other cable specifications be transmitted to the cloud and information about the electrical vehicle 10 to which the charging cable 20 belongs. Further, the data signal comprises location information, i.e., information indicating where the charging cable 20 is currently located and plugged in. For that purpose, the charging cable 20 includes in one embodiment a GPS module 23 (see Fig. 8). The data signal, hence, includes GPS coordinates identifying the current location of the charging cable 20.

It is contemplated that in other embodiments, activation of the charging cable 20 may be detected by receiving the data signal of step MS3. In such embodiments, transmission of a separate activation signal may be omitted. Further, the acts specified in steps MS2 and MS3 may be combined into a single step.

Proceeding to a step MS4, information sources are accessed to obtain situation-specific information. This includes obtaining a current state of charge of the car's battery 27, either by communicating with the car cloud directly or by communication with the user's mobile phone and requesting it to obtain information from the car cloud. This includes further collecting information about the user's current location. The user's calendar may be used to figure out when the user is likely to need his car charged in conjunction with other sources such as fall back charging rules specified by the user and to determine if a local power grid is available at the user's location as well as what local power charging capability it has. Accessing the information sources includes, in addition obtaining information about the electricity provider at the user's location, the current electricity tariff and its carbon footprint. From the power grid source, information is obtained as to the maximum current load in the local neighborhood (e.g., at local transformers).

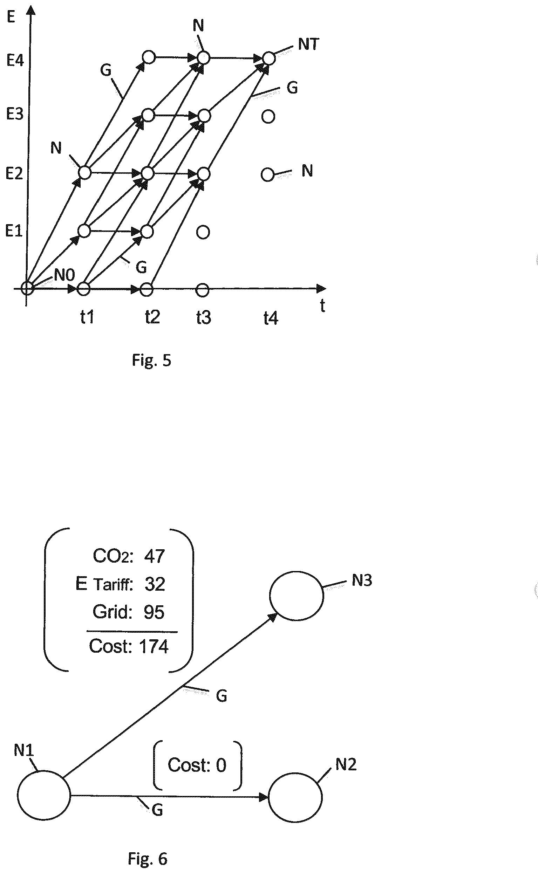

Proceeding to a step MS5, a charging schedule is generated. This includes processing the information obtained in steps MS3 and MS4 to predict current load requirements on the power grid as well as to predict electrical charging energy available and needed over the next time period, e.g. 24 hours. In one embodiment, the processing optimizes power costs for this time period. Further details as to the generation of the charging schedule are provided below with reference to Fig. 5.

Proceeding to a step MS6, the charging schedule is transmitted to the charging cable 20. The charging cable 20 operates according to the charging schedule as described below. After the charging process comes to an end, the user disconnects the charging cable 20 from the electric vehicle 10 and the power source 30. The method ends in the step MS7.

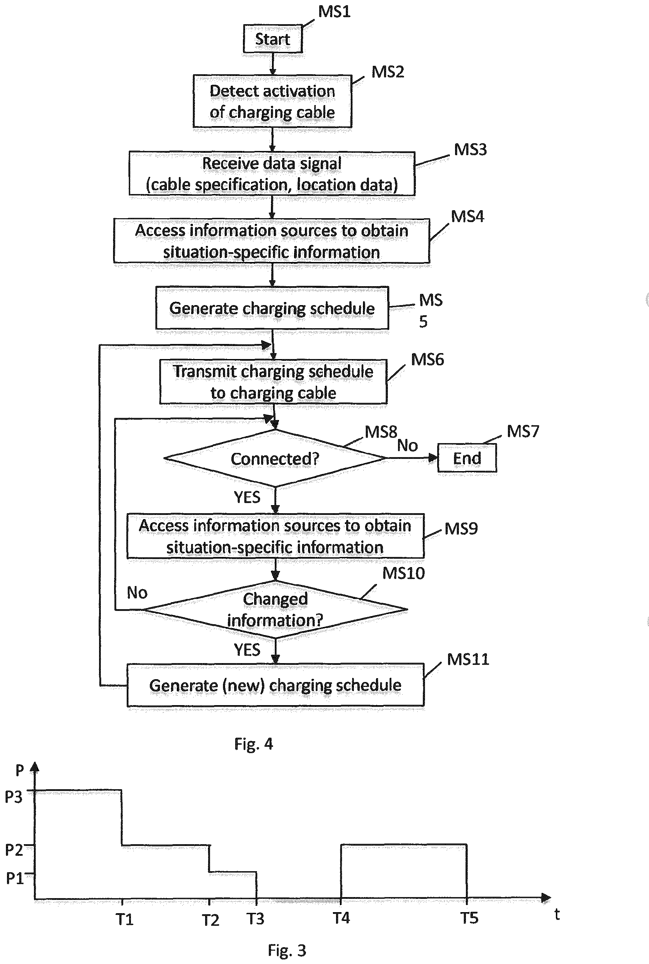

Fig. 3 is schematic illustration of a charging schedule. The illustration shows an x-y coordinate system, wherein the charging schedule is illustrated by a graph P(t) representing a charging power P as a function of time t. For illustrative purposes, three power levels P1, P2, P3 and five-time intervals (T1, T2, T3, T4, T5) are shown. During a first-time interval between zero and time T1, charging is set to occur at power level P3, which may be the maximum power level at the power source 30 or a power level dictated by the current state of the power grid. During a second time interval between time T1 and time T2 charging is set to be reduced to the power level P2, which is then further reduced during a third time interval between time T2 and time T3 to the power level P1. In the charging schedule, charging is set to stop during a fourth time interval between time T3 and time T4. That is, during the fourth time interval the power level is zero. Charging is set to resume at a power level P2 during a time interval between times T4 and time T5.

In the illustrated embodiment, the charging schedule is set to complete charging of the battery 27 by time T5. This may be the time the user needs the electric vehicle 10 or any time before that. At the end of charging according to the charging schedule, the battery 27 may be fully charged or charged to a lower level depending, e.g., on the user's itinerary or preferences.

The charging of the battery 27 may extend over a relatively long period of time, in particular when charging at a user's home location. During that period of time, the situation-specific information may change. Fig. 4 is a schematic flow diagram of another embodiment of a method for controlling charging of the electric energy storage system 27 of the electric vehicle 10. That embodiment concerns a situation in which the situation-specific information changes while the charging cable 20 operates according to the received charging schedule. The method includes steps MS1-MS7 that correspond to those shown in Fig. 2. In addition, the method includes additional steps MS8-MS11.

In step S8, it is determined if the charging cable 20 is still connected to the power source 30 and the electric vehicle 10. This may be determined by monitoring a periodically transmitted signal (a "heartbeat" signal) between the server 2 and the charging cable 20 (e.g., according to the OCPP protocol). If such a heartbeat signal is not detected, the charging cable 20 is deemed to be disconnected and the method proceeds along the NO branch to end at step MS7. If the charging cable 20 is still connected and the heartbeat signal is detected, the method proceeds along the YES branch to a step MS9.

In step MS9, the information sources are accessed to obtain situation-specific information as described above with reference to step MS4 in Fig. 2.

Proceeding to a step MS10, it is determined if the information obtained in step MS9 differs from that obtained in step MS4. This may include an evaluation if any difference is of such significance as to justify generating a new charging schedule. If any difference is deemed to be of minor significance, the method returns along the NO branch to step MS8. If, however, any difference is deemed to be significant, the method proceeds along the YES branch to a step MS 11.

In step MS11, the new charging schedule is generated, as described above with reference to step MS5 in Fig. 2. The new charging schedule is then transmitted to the charging cable 20 for execution (step MS6). The charging cable 20 is configured to operate according to the charging schedule that is received last.

In the flow diagrams shown in Fig. 2 and Fig. 4, the charging schedule is generated in step MS5 and in Fig. 4 again in step MS11. Fig. 5 is a schematic illustration of an exemplary approach for generating the charging schedule. The illustration shows an x-y coordinate system (energy state E - time t coordinate system), wherein a plurality of nodes N are interconnected through transitions G (depicted through arrows) between energy states E1-E4 and times t1-t4 (only a few nodes N and transitions G are labeled). A node N0 is shown at the origin of the x-y coordinate system and a node NT at the end of charging (time t4).

Each node N represents an energy state, i.e., the total amount of energy charged so far, at a given time t1-t4. Each transition G between two nodes N represents a charging action at a given power; graphically, this means that the steeper the arrow, the stronger power is used to achieve the next energy state in time. The node NT represents a target state, i.e., the amount a user wants to have the battery 27 charged at the time t4 when the electric vehicle 10 is needed.

In the exemplary illustration of Fig. 5, charging is planned to occur over four time periods between t = 0 and t = t4 by means of four static increments of energy (E1-E4) which may, under certain embodiments, be evenly spaced. Each node N has up to three outgoing transitions G, a (horizontal) transition indicative of no charging, a (moderately sloped) transition indicative of moderate/slow charging, and a (steeply rising) transition indicative of fast charging. After a set time period has passed, transition to a different node N takes place. In the illustrated embodiment of Fig. 5, the nodes N are evenly distributed within the shown two-dimensional area; this means that all nodes N are the same amount of time separated on the x axis and the same amount of energy on the y axis. It is contemplated that in other embodiments the distribution may be different.

As shown in Fig. 5, there are many different paths to choose to get from the node N0, which represents an initial charge state of the battery 27 prior to commencing a charging session, to the node NT at the end of the charging session. The node NT represents a charging state in which the battery 27 is charged to specification at the set time. Finding the perfect path from the node N0 to the node NT is achieved by assigning a cost to each transition G, then finding the path with the lowest costs from node N0 to node NT.

Once the costs are assigned, finding the shortest path is achieved by using, for example, Dijkstra's algorithm or any other path finding algorithm commonly employed in navigation systems. Briefly, Dijkstra's algorithm fixes a single node as the "source" node and finds the shortest paths from the source to all other nodes in the graph, thereby producing a shortest-path tree. Dijkstra's algorithm is known to operate, in general terms, as follows: let the node at which a path starts be called the initial node and let the distance of node Y be the distance from the initial node to Y. In Dijkstra's algorithm, some initial distance values are assigned, which the algorithm attempts to improve step by step.
1. Mark all nodes unvisited. Create a set of all the unvisited nodes called unvisited set.
2. Assign to every node a tentative distance value: set it to zero for the initial node and to infinity for all other nodes. Set the initial node as current.
3. For the current node, consider all of its unvisited neighbors and calculate their tentative distances through the current node. Compare the newly calculated tentative distance to the current assigned value and assign the smaller one. For example, if the current node A is marked with a distance of 6, and the edge connecting it with a neighbor B has length 2, then the distance to B through A will be 6 + 2 = 8. If B was previously marked with a distance greater than 8, then change it to 8. Otherwise, keep the current value.
4. When done considering all unvisited neighbors of the current node, mark the current node as visited and remove it from the unvisited set. A visited node will never be checked again.
5. If the destination node has been marked visited (when planning a route between two specific nodes) or if the smallest tentative distance among the nodes in the unvisited set is infinity (when planning a complete traversal; as may occur when there is no connection between the initial node and remaining unvisited nodes); then stop as the algorithm has finished.
6. Otherwise, select the unvisited node that is marked with the smallest tentative distance, set it as the new "current node" and go back to step 3.

When planning a route, it is not necessary to wait until the destination node is "visited" as above; the algorithm can stop once the destination node has the smallest tentative distance among all "unvisited" nodes (and thus could be selected as the next "current").

As to finding the shortest path in the embodiment illustrated in Fig. 5, calculating a meaningful cost is done as follows. For that purpose, reference is made to Fig. 6 which shows an excerpt of the graph shown in Fig. 5 with neighboring nodes N1, N2, N3. For every transition G, different parameters are known, e.g., at what time it occurs, what charging power it represents and what percentage of the battery 27 do start and end states represent overall in the battery 27. For instance, being charged to 100% for a long period of time is considered bad for the battery 27. So, a cost greater than zero may be assigned to a charge at all transitions G if the battery 27 is already fully charged. This will lead to the algorithm trying to fill the battery 27 as late as possible.

In addition, a list of "cost providers" is known; this is an abstract concept for any external or internal parameter that are intended to influence the charging schedule. Examples of such cost providers are battery optimization, carbon footprint, electric tariff / power cost optimization, electric grid optimizations, home solar energy consumption optimization and dynamic load management optimization.

Now the algorithm iterates over each of the transitions G in the whole graph and for each transition G asks each cost provider for its cost with the parameters from above. To each transition G a vector with many costs is assigned. In the end, all those costs are reduced into a single number (e.g., by simply adding them or by weighing certain costs higher than others). This single number is now the cost that the path finding algorithm uses when finding the lowest cost path. In Fig. 6, a cost of 174 is assigned to the transition G from node N1 to node N3, and a cost of zero is assigned to the transition G from node N1 to node N2.

Most cost providers have a low complexity; the electricity tariff cost provider calculates the amount of energy charged during a transition G and assigns the costs for that energy. The carbon footprint cost provider, for example, may make charging during "dirty hours" more expensive than when a lot of green energy is being produced. A more complex cost provider is the load balancing / grid provider. This type of cost provider knows the location of where the charging takes place and knows what transformer the location serves. Further, it knows the current and projected load of that transformer and its power limit. The closer to that limit, the higher the load balancing / grid provider raises its price. It is contemplated that if another electric vehicle is or prepares for charging via the same transformer, this additional load may affect the cost (graph), for example, because the tariff charged for a certain time period may increase due to the transformer then being closer to the power limit. To take changed circumstances into account, the charging schedule may be recalculated, as illustrated in Fig. 4. This improves the load balancing and ensures that all cars in a neighborhood operate on the same prices.

With reference to the foregoing and Fig. 5 and Fig. 6, Fig. 7 is a schematic flow diagram of one embodiment of a method for generating the charging schedule. The method starts at a step A1 and ends at a step A11. In a step A2, the time available to finish charging the battery 27 is determined. The available time may be obtained from the user's calendar. The available time becomes the length of the x-axis in Fig. 5.

Proceeding to a step A3, a total amount of power needed for charging the battery 27 with the available charging time is determined. For this determination, the vehicle's battery current state of charge (e.g., it may be at 50%), a desired target state (e.g., 80%) and the battery size (e.g., 100 KWh) are determined and processed. For example, with these exemplary values, energy of 30 KWh needs to be charged. The so-determined needed power becomes the length of the y-axis in Fig. 5.

Proceeding to a step A4, a maximum power that can be drawn for charging is determined. This is the lower of two numbers: the maximum capability of the electric vehicle 10 and the maximum capability of the grid connection, e.g., from the power source 30. This becomes the maximum "steepness" of the transitions G between the power states shown in Fig. 5.

Proceeding to a step A5, power states (nodes N in Fig. 5) are set at certain points in time (t1-t4 in Fig. 5).

Proceeding to a step A6, for each of the power states set in step A5, transitions G to neighboring states (nodes N) are determined. As shown in Fig. 5, there are multiple outgoing transitions G, e.g., three. Each transition G represents a charging action for a limited amount of time.

Proceeding to a step A7, for each transition G, detail costs are determined. The determination is based on the above-mentioned cost providers, wherein each represents an external or internal variable, for which optimization of the charging is intended.

Proceeding to a step A8, for each transition G, the detail costs determined in step A7 are converted to a weighted number. This reduces the multiple charging costs into one abstract number by weighing cost provider's costs differently or the same.

Proceeding to a step A9, a minimum-cost path is determined. Referring to Fig. 5, this includes finding the shortest path from the initial state (node N0) to the desired final charging state (node NT) by minimizing the costs over the whole path.

Proceeding to a step A10, the minimum-cost path determined in step A9 is transformed into a charging schedule. This path can be transformed into a charging schedule, as the path contains an ordered list of charging transitions G that each contain the power to charge, as well as the beginning and end times. The charging schedule is then ready for transmission to the charging cable 20.

The technology described herein ensures that power from the power source flows safely and continuously so long as it is required, and it is safe to do so. Further still, by communicating with the electric vehicle 10, embodiments of the technology are able to ensure that a best charge is provided to the electric vehicle battery 27 based upon parameters surrounding the electric vehicle 10 and its users rather than based simply upon how much maximum charging power is available from a power source. The "man in the middle" functionality briefly described above is achieved through particular configuration of electronics and modules built into the charging cable 20 and particular methods of using the same in conjunction with components built into or otherwise associated with other devices.

In one embodiment, a user may be required to prepare for using system 1 as described above. In a set-up phase, the user may have to download an application-specific software (app) developed for use with system 1, and create a user account (user profile) specifying, e.g., password, name, address, billing information, kind of electric vehicle, etc. The user account may be maintained in the server's database 36. The user links the user's charging cable 20 to the account, e.g., by scanning a QR code, or other code, or entering an ID manually. The server 2 may obtain car-specific information directly from electric vehicle 10, e.g., by logging into the car cloud with the user's car's credentials. The server 2 may extract static car information as per above. The user may further link a calendar to user account. The app may allow the user to create charging rules regarding likely use of the electric vehicle or adjust/edit standard rules that would fit most people.

Hereinafter, details of the charging cable 20, its functionalities and its operation within the system 1 are described. As used herein, electric vehicle supply equipment is an arrangement of various electronic modules on one or more printed circuit boards with suitable power and configuration to operate and perform specified and intended functions as will be specified herein below.

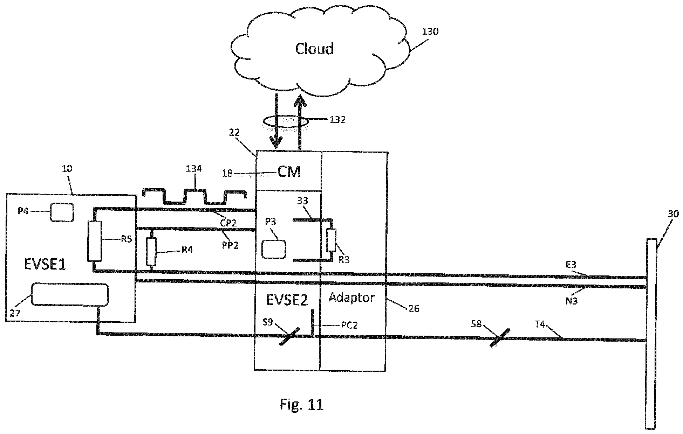

The present embodiments may be suitable for use with different power sources which may include: regular single- or multi-phase AC power sources, usually in the range of 1 to 3 phases, rated at 110 - 240 volts and 13-20 Amps (as will be illustrated in Fig. 11); heavy-duty multi-phase sources usually rated at 32 Amps; and higher capacity 3-phase AC power sources rated at up to 480 Volts and 32 Amps suitable for a 7 pin type 2 connector (as will be illustrated in Figs. 8a - 10b).

The composition of the electric vehicle charging cable may comprise a number of conductors conforming to the type of power source. As shall be depicted, embodiments of the technology described herein shall be set out with respect to a higher capacity power source necessitating a compatible charging cable having seven conductors. Still other embodiments as related to regular single- or multi- phase power sources shall be described with the charging cable comprising three conductors.

Embodiments of the technology described herein comprise a number of processors arranged and configured to execute instructions stored on a number of memories. One such operation includes determining a resistance of a resistor in a circuit, wherein the resistor is a programmable variable resistor in a closed circuit between at least two conductors. Information may further be communicated among indicator elements, of which resistors are presented by way of example, to communicate information among the various elements of the present embodiments. Other indicator elements may include capacitors, inductors, transceivers and/or memories arranged and configured as would be appreciated by the skilled person. In operation here, the number of processors will cause the resistance in each of the conductors to be measured and the difference taken there-between such that the difference is indicative of the resistance effect of the programmable variable resistor being measured. This operation takes place with known components under instructions that are a matter of designed choice to the skilled person. By this method, it becomes possible to communicate information between processors by setting the resistance of a particular resistor to be associated with certain information tabulated in a lookup table. When a processor determines the resistance and matches such determination via a known lexicon against particular information, via for example the look up table that associates resistances with the particular information, the measured resistance reveals to the processor performing the resistance measurements the particular information matching the measured resistance. For descriptive purposes, the aforementioned operation shall be described herein below in terms of a processor determining the resistance of a particular resistor.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Referring back to Fig. 1, the electric vehicle (EV) 10 is connected to the power source 30 (depicted here as type-2 socket, typically referred to as the IEC 62196 Type 2 Connector or Mennekes) via the charging cable 20. The EV 10 includes the built-in car charger herein referred to as an electric vehicle supply equipment (EVSE1) 11 arranged to electronically interface via the charging cable 20. Such interface may comprise a plug and socket arrangement (not shown). The charging cable 20 includes the in-cable control box 22 accommodating an electric vehicle supply equipment (EVSE2) 15 and a wireless communication module CM 18 therein. The charging cable 20 includes an adaptor 26 accommodating a car emulator CE 36 therein. The adaptor 26 is connected at one end to the in-cable control box 22 and at the other end to the power source 30. The connection between the adaptor 26 and the power source 30 may be made by a matching plug 32 and socket arrangement. Alternatively, the adaptor 26 may be arranged within the control box 22. Still further, the power source an electric vehicle supply equipment may be arranged at the power source 30 between the power source 30 and the adaptor 26.

Fig. 8 depicts a functional view of the in-cable control box 22 arranged in direct connection to the adaptor 26. The two are arranged along the charging cable 20 between a first cable portion 12 and a second cable portion 14. As depicted, the EVSE2 15 accommodates: at least one processor P3 arranged to execute instructions stored on memory 19; a power meter 29 arranged to measure charging power that is transmitted by the charging cable 20; a GPS 23 arranged to determine position coordinates of the charging cable 20; a display 25 arranged to display and exchange information outside of the in-cable control box 22; and a plurality of electronic switches 35 and a safety module 37 arranged to selectively and safely control power transmission over the charging cable 20. The depicted modules may be logically arranged on any number of powered printed circuit boards as a matter of design choice known to the skilled person.

Fig. 9 depicts an arrangement for implementing a first embodiment of the technology described herein. As shown, a wall electric vehicle supply equipment EVSE 41 is connected to the power source 30 at one end and the charging cable 20 at the other end. By separate arrangement, the charging cable 20 may also be connected directly and/or partially to the power source 30.

For illustrative purposes, the power source 30 is comprises a 7-pin Type 2 connector, commonly referred to as Mennekes. Therefore, the charging cable 20 comprises seven individual conductors: a control pilot depicted in two parts, a first control pilot line CP1 and a second control pilot line CP2; a proximity pilot depicted in two parts, a first proximity pilot PP1 and a second proximity PP2; a ground depicted in two parts, a first ground E1 and a second ground E2; a neutral depicted in two parts, a first neutral line N1 and second neutral line N2; and three multi-phase power transmission lines T1, T2 and T2.

EVSE 41 may include at least one processor P1 arranged to execute instructions stored in memory as well as receive power from T1 via first power connector PC1. The ground E1 and the neutral N1 are arranged to run through the EVSE 41 from the power source 30 to the adaptor 26. A plurality of first electric switches S1, S2 and S3 are arranged on the transmission lines T1, T2 and T3 respectively and are configured to be selectively opened and closed by processor P1.

The adaptor 26 may be arranged to receive power from a transmission line, such as the transmission line T1 via a second power connector PC2. By virtue of the connectivity between the adaptor 26 and the EVSE2 15, the EVSE2 15 may also be arranged to receive power from the transmission line T1 via the second power connector PC2. The adaptor 26 accommodates the car emulator 36 (Fig. 8) that includes: a second processor P2, a first resistor R1, a second resistor R2 and a third resistor R3. The resistors R1, R2 and R3 may be fixed or variable resistors configured and arranged to be programmable by the second processor P2. The second resistor R2 is arranged in circuit with the EVSE 41 over the first control pilot line CP1 and first ground E1. The first resistor R1 is arranged in a circuit with the EVSE 41 over the first proximity pilot PP1 and the first ground E1. The third resistor R3 is arranged in a circuit 33 with the EVSE2 15.

The EVSE2 15 includes a processor P3 arranged to execute instructions stored in a memory (not shown). A plurality of second electric switches S4, S5 and S6 are individually arranged on the transmission lines T1, T2 and T3, respectively, upstream in the direction of the EV 10 from the power source 30. The second electric switches S4, S5 and S6 are configured to be selectively opened and closed by the processor P3.

A connector (not shown) attaching the charging cable 20 to the EV 10 includes a fourth resistor R4 arranged in a circuit with EVSE2 15 over the second proximity pilot PP2 and the second ground E2. The fourth resistor R4 is fixed and relates to the rating of the second cable portion 14. Alternatively, in another embodiment, the resistor R4 may be arranged and configured to be programmable by processor P3 or may be pre-programmed depending upon application embodiment.

The EVSE1 11, of the electric vehicle 10, comprises a processor P4 arranged to execute instructions stored on a memory (not shown), a fifth resistor R5 arranged in a circuit 120 with the EVSE2 15 over the second control pilot line CP2 and the second ground E2, and a battery 27 arranged to receive a charge from the transmission lines T1, T2 and T3 under the control of the processor P4. The fifth resistor R5 is arranged and configured to be programmed by the processor P4. The transmission lines T1, T2 and T3 are connected to the EV 10 so as to deliver charging power to the EV 10 from the power source 30.

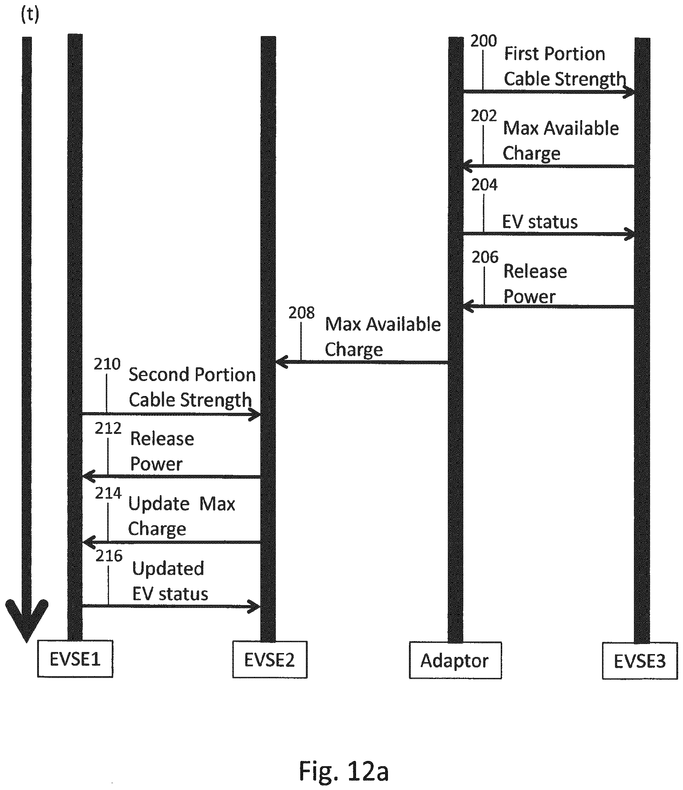

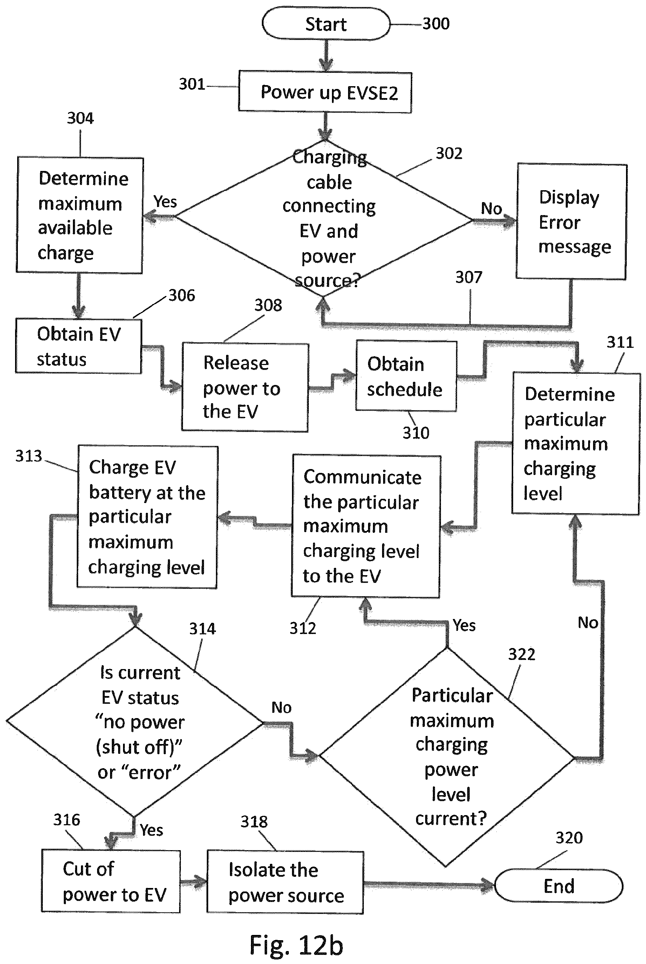

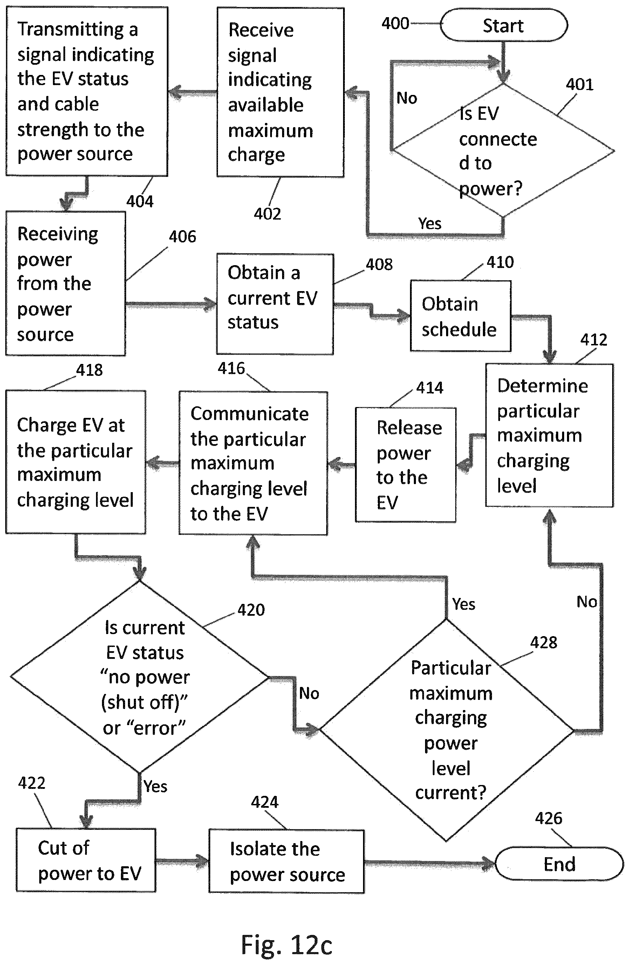

Figure 12a depicts a signal chart method for charging an EV 10 in accordance with the first arrangement of the technology disclosed herein. In step 200, upon being connected to the power source 30, the EVSE3 41 receives power over the first power connector PC1 such that the first processor P1 powers up. Typically, after initial installation, the first processor P1 is in regular receipt of power from the power source thereby obviating the necessity to power up for every use. Upon becoming operational, the first processor P1 obtains from memory (not shown) or from checking (measuring the resistance) the first resistor R1, the charge carrying capacity of the cable first portion 12 of the charging cable 20.

In step 202, the EVSE3 41 determines which is the lower value between the maximum current generating capabilities of the power source 30 and the maximum current carrying capabilities of the first cable portion 12 of the charging cable 20, which is determined from reading the resistance of the first resistor R1. Alternatively, an even lower value may be substituted by the EVSE3 41. Subsequent thereto but included within this step, the EVSE3 41, upon determining the lower value, generates the signal 104, encodes the lower value into the signal 104, and transmits the signal 104 over the CP1 to the adaptor 26.

In step 204, the EVSE3 41 determines the EV status by reading the second resistor R2. The EV status set into the second resistor R2 by default is "ready (charging)". The second resistor R2 would be in circuit with the EVSE3 41 by virtue of the adaptor 26 being plugged into or otherwise having a physical connection with the EVSE3 41.

In step 206, upon the determination of the status as being "ready (charging)", the EVSE3 41 closes first switches S1, S2 and S3 causing power to be released from the power source 30, along the transmission lines T1, T2 and T3 and in the direction of the EV 10. Power would thus be received at the adaptor 26, along the second power charging conductor PC2, thereby powering up the second processor P2. Power would further be received at the EVSE2 15, via the second power charging conductor PC2, thereby powering up the third processor P3.

In step 208, the second processor P2 causes the signal 104 to be detected and decoded such that the maximum charging power available from the power source 30 becomes known at the second processor P2. The second processor P2 then sets the resistance of the third resistor R3 to be indicative of the maximum charging power available from the power source 30 such that when third processor P3 determines the resistance of the third resistor R3, the maximum charging power available from the power source 30 becomes known to the third processor P3.

In another embodiment, a current status of the EV 10 may be communicated to the EVSE3 41 by the second processor P2 setting the resistance of the second resistor R2 accordingly, thereby enabling the first processor P1 to read and decode the resistance of the second resistor R2. The second processor P2 sets the resistance of the second resistor R2 to match the EV status, for example, "ready (charging)". First processor P1 is enabled to read the resistance of the second resistor R2 and decodes the current state of the EV status.

In step 210, the third processor P3 then obtains the current carrying capacity strength or rating of the EV charging second cable portion 14 by determining the resistance of the fourth resistor R4. Alternatively, if the current carrying capacity or rating of the EV charging second cable portion 14 is known in advance, the resistance of the fourth resistor R4 may be set in advance. Such may, for example, be read from information stored in memory (not shown).

In step 212, the third processor P3 obtains a charging schedule from the cloud 130 via the communication module 22. The charging schedule sets out a maximum charge level or select level per a given time period for the fourth processor P4 to effect and for the third processor P3 to communicate such that the fourth processor P4 can implement the charging of the EV battery 27. The third processor P3 then encodes a current maximum available charge, as dictated by the schedule, into the signal 134 that is then transmitted on the second control pilot line CP2 to the EVSE1 11 to be read and decoded by the fourth processor P4. The third processor P3 then causes the second electric switches S4, S5 and S6 to close thereby releasing power along the transmission lines T1, T2 and T3 to the EV 10 for charging of the EV battery 27 under the control of fourth processor P4 upon a determination of the EV status being "ready (charging)". In an alternative embodiment, the schedule may be obtained after charging of the EV 10 has commenced.

In step 214, the third processor P3 updates the maximum charge level encoded into signal 134 in accordance with the schedule thereby causing the fourth processor P4 to adjust the charging of the EV battery 27. Accordingly, the fourth processor P4 proceeds with the charging of the EV battery 27 based upon the maximum available power decoded from signal 134 regardless of whether a maximum charge level for charging the EV battery 27 is equal to or less than the maximum available charging power from the power source 30.

In step 216, the third processor P3 reads the EV status from the resistance of the fifth resistor R5 as set by the fourth processor P4. Periodically, the fourth processor P4 will update the EV status by setting a corresponding resistance on the fifth resistor R5 for the third processor P3 to read and decode. If the EV status were to be changed to "no power (shut off) " or "error", the third processor P3, upon detection of the same: communicates (132) the EV status to the cloud 130 via communication module 22; to the first processor P1 by causing the second processor P2 to set the resistance of the second resistor R2 accordingly; and to promptly open the second electronic switches S4, S5 and S6 thereby cutting off power transmission to the EV battery 27 from the transmission lines T1, T2 and T3 and thus effectively halting the charging process.

Figure 5b depicts a flowchart method for charging an EV 10 in accordance with the first arrangement of the technology disclosed herein. The method starts in step 300 and proceeds to step 301 wherein the EVSE2 15 is powered up. For example, power may be caused to be released from the power source 30 via instructions, which may be received at or pre-programmed (to be retrieved upon determination of the charging cable 20 being connected with the power source 30). Functionally, the first processor P1 may close first switches S1, S2 and S3 thereby facilitating power flow along the transmission lines T1, T2 and T3 to the second power connector PC2 thus powering up the EVSE2 15.

In step 302, a determination is made whether the charging cable 20 is effectively connecting the EV 10 with the power source 30. For example, the determination may be made by the EVSE 2 detecting a charge connection between EV 10 and power source 30. In the event of a positive determination, the method continues to step 304. In the event of a negative determination, a user error message may be generated and communicated to the user via display 25 and the method reverts back (307) to the step 302. Alternatively, after a given amount of reverts, the method may automatically end (not shown).

In step 304, maximum available power from the power source to charge the EV battery 27 is determined. For example, such determination may be performed by first processor P1 comparing a maximum of power output from power source 30 versus power carrying capacity of the charge first cable portion 12 and then communicating the lesser of the two, via a handshake or encoded into a signal (e.g. 104), to the third processor P3.

In step 306, EV status is obtained. For example, the status of the EV 10, with respect to charging its battery 27, may be determined and communicated by the EV, via handshakes, to the control box 22 and processor P3 in particular.

In step 308, power is released to the EV 10 for charging its battery 27. For example, the release may be enabled by the third processor P3 closing a plurality of switches (S4, S5, S6) on the transmission lines T1, T2 and T3.

In step 310, a charging schedule is obtained. For example, the charging schedule may be received from the cloud and may further comprise charging levels per given period of time (pre)defined and/or particular to the user or EV battery 27 requirements.

In step 311, a particular maximum charging level is determined. For example, the particular maximum charging level may be the appropriate level in which the EV battery 27 should charge at the particular point in time in accordance with the schedule obtained in step 310. The determination of the particular maximum charging level may be performed by the third processor P3.

In step 312, the particular maximum charging level is communicated to the EV 10. For example, a particular maximum charging level, in conformity with the schedule of step 310, may be determined by the third processor P3 encoded into signal 134 and communicated to the fourth processor P4 over the second control pilot line CP2 or via a handshake as described above or via similar means as envisioned by the skilled person.

In step 313, the EV battery 27 is charged at the particular maximum charging level. For example, as envisioned by the skilled person, the fourth processor P4, now armed with the current particular maximum charging level makes use of power from the power source 30 to charge the EV battery 27 only at or below the level of the particular maximum charging level, which, as per the above, may be different from the power released to the EV 10 in step 308.

In step 314, a determination is made whether the current EV status is one of "no power (shut off)" and "error". For example, the current EV status may be determined by the fourth processor P4 and communicated, via signal, handshake and the like to the third processor P3 that then may decode and/or otherwise read the current EV status and/or compare the newly received EV status with the previously known EV status from step 306. If the third processor P3 determines that the newly received EV status is "no power (shut off)" or "error" (e.g. YES), the method continues to step 316. If the third processor P3 determines that the newly received EV status is other than "no power (shut off)" or "error" (e.g. NO), the method continues to step 322.

In step 316, power is cut to the EV 10. For example, the third processor P3 causes the plurality of the second switches S4, S5 and S6 to open, thereby severing the electrical connection between the EV 10 and the power source 30 as was established over the transmission lines T1, T2 and T3.

In step 318, the power source 30 is isolated. For example, the first processor P1 opens the first plurality of switches S1, S2, S3 thereby further severing the electrical connection initiated in step 316 and electrically cutting off or isolating the wall EVSE 41 and the power source 30 from the other elements depicted in Figure 2. In step 320, the method ends.

In step 322, a determination is made whether the maximum charging level transmitted in step 312 is current. For example, the third processor P3 may compare the particular maximum charging level communicated in step 312 with what would be a current or actual level for this particular point in time as would be in accordance with the obtained schedule. If YES (the particular maximum charging level is up to date with the schedule, the method reverts to step 312 wherein the particular maximum charging level is communicated to the EV. If the determination is that the charging level is not current (e.g. NO), the method reverts back to step 311 wherein a particular maximum charging level in accordance with the obtained schedule is determined as above.

Another operation of the present embodiment will now be described with reference to the flowchart in Figure 5c that is directed to a method for controlling the charging of an EV battery 27.

Here, the operation starts in step 400 and proceeds to step 401 wherein a determination is made whether the EV 10 is connected to the power source 30 such that power from the power source may be used to charge the EV battery 27.

If the determination is positive that the EV 10 is connected to power source 30, the method continues to step 402. If the determination is negative, then the method reverts to step 401.

In step 402, a signal indicating a maximum power charge available from the power source is received. For example, the signal may be received at the in-cable control box and one of the second and the third processor P2 or P3 in particular. The signal may be generated by a smart power source (as depicted in Figure 2) such as by the first processor P1 effecting a power output measurement or retrieving such information from memory (not shown). Once determined, the signal may be communicated via encoding into a signal (e.g. 104), handshake and the like.

In step 404, a signal indicating a maximum charging cable rating and a status of the electric vehicle that is connected to the power source is transmitted to the power source. For example, the maximum charging cable rating may be determined and the EV status may be received from the EV 10 as per steps highlighted above. Additionally, the EV status may be set by default to "vehicle detected".

In step 406, power is received from the power source. For example, the power may be received at the in-cable control box 22 via the first processor P1 closing the first switches S1, S2, S3, thereby releasing power from the power source 30 along transmission lines T1, T2, T3. With power received, the second and third processors P2 and P3 may power up per the second power connector PC2 as described above.

In step 408, a current status of the EV 10 is obtained. For example, the current status may be determined within the EV 10 by an appropriately configured and arranged fourth processor P4 executing appropriate steps stored in a memory (not shown). The current status may then be encoded into a transmitted signal, communicated via a handshake and the like to the in-cable control box 22 and the third processor P3 in particular.

In step 410, a charging schedule for the EV battery 27 may be obtained. The schedule may be obtained (132) from the cloud 130 over communication module CM 18 and may comprise various considerations including an appropriate maximum charging level over, for and at a particular period of time relevant and/or specific to the EV 10 and/or the power source 30. The charging schedule may further be arranged and configured to be used by the in-cable control box 22 and the second and/or third processors P2, P3 in particular to set the charging level for the EV battery 27 to be further executed by the fourth processor P4. Alternatively, the schedule may be obtained at a later time.

In step 412, a particular maximum charging level is determined. For example, as highlighted above, the determination of the particular maximum charging level may be performed by the third processor P3.

In step 414, power is released to the EV 10. For example, as highlighted above, the third processor P3 may cause the second plurality of switches S4, S5, S6 to close thereby facilitating power flow along the transmission lines T1, T2, T3 from the power source to the EV 10.

In step 416, the particular maximum charging level is communicated to the EV. For example, as highlighted above, the third processor P3 may communicate the level to the fourth processor P4.

In step 418, the EV battery 27 is charged at the particular maximum charging level. For example, as highlighted above, the fourth processor P4, now armed with the particular maximum charging level as communicated from the third processor P3, effects the charging of the EV battery 27 at the particular maximum charging level with power received from the power source 30.

In step 420, a determination is made whether the current EV status is one of "no power (shut off)" and "error". For example, as highlighted above, the current EV status may be determined by the fourth processor P4 and communicated to the third processor P3 which then determines if the newly received EV status. If the EV status is "no power (shut off)" or "error" (e.g. YES), the method continues to step 422. If the third processor P3 determines that the newly received EV status is other than "no power (shut off)" or "error" (e.g. NO), the method continues to step 428.

In step 422, power is cut to the EV 10. For example, as highlighted above, the third processor P3 causes the plurality of the second switches S4, S5 and S6 to open, thereby severing the electrical connection between the EV 10 and the power source 30 as was established over the transmission lines T1, T2 and T3.

In step 424, the power source 30 is isolated. For example, as highlighted above, the first processor P1 opens the first plurality of switches S1, S2, S3 thereby electrically cutting off or isolating the wall EVSE 41 and the power source 30 from the other elements depicted in Figure 2.

In step 426, the method ends.

In step 428, a determination is made whether the maximum charging level transmitted in step 312 is current. For example, as highlighted above, the third processor P3 may make the determination. If YES (the particular maximum charging level is up to date with the schedule, the method reverts to step 416 wherein the particular maximum charging level is communicated to the EV. If the determination is that the charging level is not current (e.g. NO), the method reverts back to step 412 wherein a particular maximum charging level in accordance with the obtained schedule is determined as highlighted above.

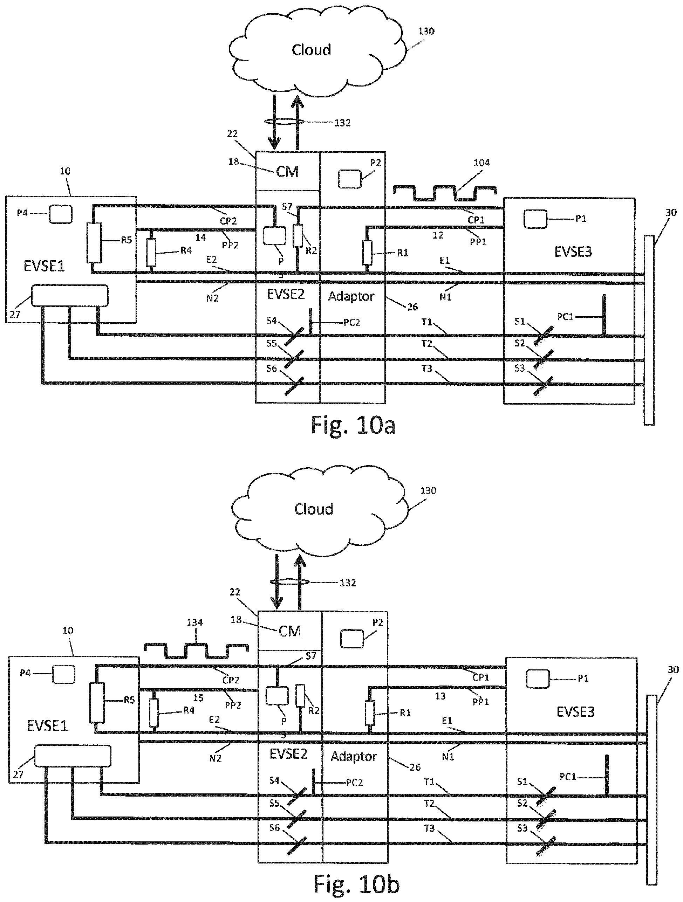

Figures 10a and 10b depict a second arrangement for charging an EV 10 in accordance with another embodiment of the technology disclosed herein, wherein like reference numerals are used to denote like elements. As depicted, the adaptor 26 accommodates the first resistor R1, with the second resistor R2 and the third resistor R3 now absent from the adaptor 26. The second resistor R2 is now accommodated in the EVSE2 15 and the second power connector PC2 now runs directly to the EVSE2 15 from the transmission line T1 thereby avoiding the adaptor 26.

The first control pilot line CP1 is now directly connected with second control pilot line CP2 via third electronic switch S7 (shown in the open position in Figure 3a and in the closed position in Figure 3b) and the second resistor R2 is now arranged in circuit by the connected CP lines or conductors (CP1 and CP2) and the first and second ground lines, E1 and E2, which are now also connected. The third electronic switch S7 is configured to be selectively opened and closed by the third processor P3.

The operation of the second arrangement for charging an EV 10 in accordance with another embodiment of the technology disclosed herein will now be described with reference to Figure 6.

Here, the operation starts in step 600 and proceeds to step 602 wherein, a closed circuit between the power source 30 and the EV 10 is made. For example, the third electronic switch S7 is set to close (Figure 3b) thereby connecting the first control pilot line CP 1 with the second control pilot line CP2 such that the EVSE3 41 is in circuit with EVSE1 11.

In step 604, a signal is received from at EV 10. For example, the signal may, as highlighted above, comprise the maximum available charging power from the power source 10 in cooperation with the charging cable 22, namely, the lesser value of the maximum current output of the power source 30 and the charge carrying capacity of the first cable portion 12. The signal 104 may now uninterruptedly propagates to the EVSE1 11 where it is detected and decoded by the fourth processor P4.

In step 606, the EV status may be set to "vehicle detected". For example, the setting may be made in response to detection of the signal generated in step 604. As depicted, signal 104, comprising the maximum available charging power may be received and decoded at the fourth processor P4 which in response thereto causes the EV status to read "vehicle detected" and further causes the resistance of the fifth resistor R5 to be set to a value consistent with this EV status.

In step 608, power is released from the power source. For example, the resistance of the fifth resistor R5 is determined and decoded by the first processor P1 via the closed circuit comprising the control pilot conductors and the grounds and the in response to a detection of the EV status being "vehicle detected" (e.g. as per step 606), the first processor P1 causes the first switches S1, S2 and S3 to close thereby releasing power from the power source 30 over transmission lines T1, T2 and T3 in the direction of the EV10. As may be appreciated by the skilled person, other EV status may be detected without hindering the method. The signal may be received at the in-cable control box 22; may be generated by the first processor PI; and be encoded with information regarding the maximum available charge from the power source 30 for charging the EV 10 and transmitted along the control pilot lines CP1 and CP2.

In step 610, the circuit closed in step 602 is opened. For example, the third switch S7 may be opened by the third processor P3. In an alternative embodiment, step 612 is performed prior to step 610.

In step 612, a new maximum available charge is determined and transmitted to the EV and the EV is emulated to the wall EVSE. For example, the cable rating of the second cable portion 14 may be determined by the third processor P3 by its determining the resistance of the fourth resistor R4 and/or reading the same from a memory (now shown). The third processor P3 may further determine the maximum available charge available from the power source 10 (as highlighted above) as well as determine the current EV status by determining the resistance of fifth resistor R5. The third processor P3 may then generate the signal 134 encoded with the maximum available charge information that is available from the power source 30 as may be decoded from the signal 104 and transmit the signal 134 to the EVSE1 11 along the second control pilot line CP2. The third processor P3 further closes the plurality of second electronic switches S4, S5 and S6, thereby enabling power transmission to the EV 10 over the transmission lines T1, T2 and T3. The third processor P3 may still further set the resistance of the second resistor R2 to be in accordance with the current EV status such that the current EV status may become known to first processor P1 by its determination of the resistance of the second resistor R2. Finally, the fourth processor P4 instructs the EV 10 to charge at a maximum available charge via the signal 134. Alternatively, the processor fourth processor P4 may set other charge rates in addition thereto so long as it does not exceed the aforementioned maximum available charge.

In step 614, a charging schedule is obtained. For example, the charging schedule may be obtained from the cloud 130 and be particular to desired charging requirements and/or criteria of the EV10. The schedule may be obtained as highlighted above.

In step 616, a particular maximum charging level is determined. For example, as highlighted above, the determination of the particular maximum charging level may be performed by the third processor P3.

In step 618, the particular maximum charging level is communicated to the EV for it to charge its battery at a time and power level dictated by the schedule. For example, as highlighted above, the third processor P3 may communicate the level to the fourth processor P4.

In step 620, the EV battery 27 is charged at the particular maximum charging level. For example, as highlighted above, the fourth processor P4 effects the charging of the EV battery 27 at the particular maximum charging level with power received from the power source 30.

In step 622, a determination is made whether the current EV status is one of "no power (shut off)" and "error". For example, as highlighted above, the current EV status may be determined by the fourth processor P4 and communicated to the third processor P3 which then may determine current EV status accordingly. If the EV status is "no power (shut off)" or "error" (e.g. YES), the method continues to step 624. If the third processor P3 determines that the newly received EV status is other than "no power (shut off)" or "error" (e.g. NO), the method continues to step 630.

In step 624, power is cut to the EV 10. For example, as highlighted above, the third processor P3 severs the electrical connection between the EV 10 and the power source 30.

In step 626, the power source 30 is isolated. For example, as highlighted above, the first processor P1 isolates the wall EVSE 41 and the power source 30 from the other elements depicted in Figure 2. In step 628, the method ends.

In step 630, a determination is made whether the maximum charging level transmitted in step 312 is current. For example, as highlighted above, the third processor P3 determines whether the current particular maximum charging level communicated in step 618 is up to date with the obtained schedule (of step 614). If YES, the method reverts back to step 618 and if not, the method reverts back to step 616.

Figure 11 depicts a third arrangement for charging an EV 10 in accordance with another embodiment of the technology disclosed herein. As shown: the power source 30 comprises a domestic wall socket, such as one having a standard domestic wall socket connection with other embodiments of such connections, as may be envisioned by the skilled person, as dependent upon the geographical location and or application of international technical standard in usage; cable socket (not shown) facilitating connection of three conductors: a transmission line T4; a neutral conductor N3; and a ground E3.

By way of example, a fourth electric switch S8 may be located proximate to the power source 30 and may comprise a standard domestic safety switch or circuit breaker. The fourth electronic switch S8 may be arranged and configured to be controlled manually or by the third processor P3. Domestic wall sockets generally lack any signal generation, communication and/or processing means and therefore in the depicted arrangement there is no use made of a wall EVSE (e.g. EVSE3 41) with the domestic wall socket as the power source 30. The adaptor 26 is configured to mate with the domestic wall socket and comprises the third resistor R3 arranged in circuit 33 with the EVSE2 15 such that the third processor P3 may determine the resistance of the third resistor R3. As the adaptor 26 is preconfigured to mate with a particular power source configured to deliver a particular maximum charging power, the level of the available maximum charging power from the domestic power socket is known in advance. Accordingly, the resistance of the third resistor R3 may be pre-configured such that when determined by the third processor P3, the resistance reveals the level of available maximum charging power from the power source 30. The EVSE2 accommodates the third processor P3 therein that is arranged to enable communication 132 with the cloud 130 over the communication module 22 and to selectively open and close a fifth electronic switch S9 arranged on the transmission line T4 upstream, in the direction of the EV 10, from the power source 30 and from the fourth electronic switch S8.

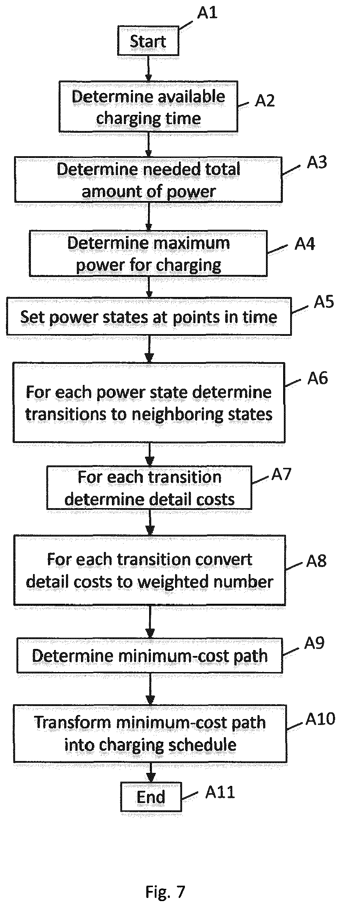

A method for charging an EV 10 in accordance with the third arrangement of the technology disclosed herein will now be described with general reference to Figures 4 and 7 wherein like reference numerals are used to denote like elements.

Here, the operation starts in step 700 and proceeds to step 702, wherein an appropriate adaptor is selected. For example, an adaptor is matching the domestic wall socket is selected and brought into electrical contact with both the EVSE2 15 and the domestic wall socket as the power source 30.

In step 704, power is released from the power source. For example, when present, the fourth electronic switch S8 is closed to enable power flow through transmission line T4 in the direction of the EV 10 thereby powering up the EVSE2 15 over the second power connection PC2. The fourth electronic switch S8 may be closed manually or electronically under the control of the third processor P3 or other means not shown.

In step 706, a maximum charging power available from the power source is determined. For example, the third processor P3 may be powered up by the power flowing per step 704 to the second power connector PC2. The third processor P3 then determines and decodes the resistance of the third resistor R3 in order to identify the maximum available charging power from the power source 30.

In step 708, the EV status and the second cable portion rating are determined. For example, the EV status and second cable portion rating may be determined by the third processor P3 as highlighted above, namely from the handshake conveyed over the fifth and fourth resistor R5 and R4 respectively.

In step 709, a determination is made whether the EV status is "vehicle detected". In the event of a positive determination (e.g. YES), the method proceeds to step 710. In the event of a negative determination, namely, the EV status is other than "vehicle detected", (e.g. NO), the method reverts back to step 708, selectively, until the method times out and ends.

In step 710, power is released to the EV. For example, upon a determination that the EV status is "vehicle detected", the third processor P3 may close the fifth electronic switch S9 thereby releasing charging power to the EV 10 over transmission line T4. As may be understood by the skilled person, charge arrangements depicted in Figure 4 may include more than one transmission line.

In step 712, a charging schedule is obtained. For example, the charging schedule may be obtained from the cloud 130 and be particular to desired charging requirements and/or criteria of the EV10.

In step 714, a particular maximum charging level is determined. For example, as highlighted above, the determination of the particular maximum charging level may be performed by the third processor P3.

In step 716, the particular maximum charging level is communicated to the EV for it to charge its battery at a time and power level dictated by the schedule. For example, as highlighted above, the third processor P3 may communicate the level to the fourth processor P4.

In step 718, the EV battery 27 is charged at the particular maximum charging level. For example, as highlighted above, the fourth processor P4 effects the charging of the EV battery 27 at the particular maximum charging level with power received from the power source 30.

In step 720, a determination is made whether the current EV status is one of "no power (shut off)" and "error". For example, as highlighted above, the current EV status may be determined by the fourth processor P4 and communicated to the third processor P3. If the EV status is "no power (shut off)" or "error" (e.g. YES), the method continues to step 722. If the third processor P3 determines that the newly received EV status is other than "no power (shut off)" or "error" (e.g. NO), the method continues to step 728.

In step 722, power is cut to the EV 10. For example, as highlighted above, the third processor P3 severs the electrical connection between the EV 10 and the power source 30.

In step 724, the power source 30 is isolated. For example, as highlighted above, the first processor P1 isolates the wall EVSE 41 and the power source 30 from the other elements depicted in Figure 2.

In step 726, the method ends.

In step 728, a determination is made whether the maximum charging level transmitted in step 312 is current. For example, as highlighted above, the third processor P3 determines whether the current particular maximum charging level is current with the obtained schedule. If YES, the method reverts back to step 618 and if not, the method reverts back to step 616.

By this arrangement, the EV 10 is caused to charge at a particular maximum power charging level set by the third processor P3 in accordance with the schedule obtained from the cloud 130 regardless of the available maximum charging power from the source 30.

The communication module CM of the present embodiments may comprise network and communication chips, namely, semiconductor integrated circuits that use a variety of technologies and support different types of serial and wireless technologies as envisioned by the skilled person. Example serial technologies supported by the communication module include RS232, RS422, RS485, serial peripheral interface, universal serial bus, and USB on-the-go, Ethernet via RJ-45 connectors or USB 2.0. Example wireless technologies include code division multiple access, wide band code division multiple access, wireless fidelity or IEEE 802.11, worldwide interoperability for microwave access or IEEE 802.16, wireless mesh, and ZigBee or IEEE 802.15.4. Bluetooth® chips may be used to provide wireless connectivity in solution-on-chip platforms that power short-range radio communication applications. The communication module CM may be configured to operate using 2G, 3G or 4G technology standards, including universal mobile telecommunications systems, enhanced data rates for global evolution and global system for global communication. The 4G standard is based solely on packet switching, whereas 3G is based on a combination of circuit and packet switching.

The processor of the present embodiments may be disposed in communication with one or more memory devices, such as a RAM or a ROM, via a storage interface. The storage interface may connect to memory devices including, without limitation, memory drives, removable disc drives, etc., employing connection protocols such as serial advanced technology attachment, integrated drive electronics, IEEE-1394, universal serial bus, fiber channel, small computer systems interface, etc. The memory drives may further include a drum, magnetic disc drive, magnetooptical drive, optical drive, redundant array of independent discs, solid-state memory devices, solid-state drives, etc.

The memory devices may store a collection of program or database components, including, without limitation, an operating system, a user interface application, a user/application data (e.g., any data variables or data records discussed in this disclosure), etc. The operating system may facilitate resource management and operation of the computer system. Examples of the operating system include, without limitation, Apple Macintosh OS X, Unix, Unix-like system distributions, Linux distributions, IBM OS/2, Microsoft Windows, Apple iOS, Google Android, Blackberry OS, or the like. The user interface may facilitate display, execution, interaction, manipulation, or operation of program components through textual or graphical facilities, including but not limited to touch screens. For example, user interfaces may provide computer interaction interface elements on a display system operatively connected to the computer system, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

It will be appreciated that, for clarity purposes, the above description has described embodiments of the technology described herein with reference to different functional units and processors. However, it will be apparent that any suitable distribution of functionality between different functional units, processors or domains may be used without detracting from the technology described herein. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

The specification has described systems and methods for charging electric vehicles. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of operating a system for controlling charging of an electric energy storage system of a user's electric vehicle from a power source having a maximum charging power limit, wherein the electric storage system is configured to be charged at a select limit, wherein the system includes a server and a charging cable, comprising:
receiving at the server a data signal transmitted by the charging cable having a communications module for wirelessly communicating with the server, the data signal comprising a cable specification, and location data indicating the location at which the charging cable is coupled to the power source;
accessing by the server information sources to obtain circumstantial information, the circumstantial information comprising at least electrical power grid information and calendar information associated with the user;
generating by the server a charging schedule based on the cable specification, the location data and the circumstantial information; and
transmitting by the server the charging schedule to the communication module of the charging cable, the charging cable causing charging of the electric energy storage system according to the charging schedule.

2. The method of Claim 1, wherein the charging schedule comprises a first time period that causes charging of the electric energy storage system at less than the maximum charging power limit of the power source.

3. The method of Claims 1 and 2, wherein the charging schedule comprises a second time period that causes charging of the electric energy storage system at the maximum charging power limit of the power source.

4. The method of Claims 1 to 3, further comprising extracting by the server an identifier unique to the charging cable from the cable specification, wherein the identifier is associated with user-specific data and electric vehicle specific data.

5. The method of Claims 1 to 4, wherein accessing the information sources includes accessing a user calendar information source to obtain the calendar information and accessing an electric vehicle information source to obtain an electric-vehicle specification including information about the electric energy storage system.

6. The method of Claims 1 to 5, wherein accessing the information sources includes accessing a power grid information source to obtain the electrical power grid information, wherein the electrical power grid information specifies a maximum current load based on the location information.

7. The method of Claims 1 to 6, wherein the charging schedule sets a start time and ends at an end time, the end time being based on at least one of the calendar information and predetermined charging rules associated with the user, wherein the charging schedule includes several time periods between the start time and the end time, each one of these time periods defining a specific charging power to be used during the respective time period.

8. The method of Claims 1 to 7, wherein the charging schedule is determined by applying a lowest-cost path finding algorithm.

9. The method of Claim 8, wherein applying the lowest-cost path finding algorithm includes:
determining an available time between the start time and the end time;
determining a total amount of energy needed for charging the electric energy storage system based on information obtained from the electric vehicle information source, including a current state of charge of the electric energy storage system, a desired target state of charge and a capacity of the electric energy storage system;
determining a maximum power that can be drawn for charging based on power grid information and electric vehicle information;
setting a plurality of power states at selected points in time between the start time and the end time;
determine for each power state transitions to neighboring power states;
determine for each transition detail costs;
converting for each transition the detail costs to a weighted number;
determining a minimum-cost path; and
transforming the minimum-cost path into the charging schedule.

10. The method of Claims 1 to 9, further comprising generating a new charging schedule by the server when changing circumstantial information is detected during charging, and transmitting by the server the new charging schedule to the communication module of the charging cable, the charging cable causing charging of the electric energy storage system according to the new charging schedule.

11. The method of Claims 1 to 10, wherein receiving the data signal and transmitting the charging schedule occurs by using an Open Charge Point Protocol (OCPP).

12. A system for controlling charging of an electric energy storage system of a user's electric vehicle from a power source having a maximum charging power limit, wherein the electric vehicle is configured to charge the electric energy storage system at a select limit, comprising:
a server comprising a processor, a data storage system and a first communications module; and
a charging cable comprising a control box configured to set a predetermined power charge select limit for the electric vehicle, an adaptor arranged to connect the control box and the power source, and a second communications module for wirelessly communicating with the server, wherein the processor is configured to receive a data signal transmitted by the second communications module of the charging cable, the data signal comprising a cable specification;
to access at least one information source to obtain circumstantial information, the circumstantial information comprising at least electrical power grid information and calendar information associated with the user;
to generate a charging schedule based on the cable specification, the location data and the circumstantial information; and
to transmit the charging schedule to the second communication module of the charging cable, the charging cable configured to cause charging of the electric energy storage system according to the charging schedule.

13. The system of Claim 12, wherein the charging schedule comprises a first time period that causes charging of the electric energy storage system at less than the maximum charging power limit of the power source.

14. The system of Claims 11 and 12, wherein the charging schedule comprises a second time period that causes charging of the electric energy storage system at the maximum charging power limit of the power source.

15. The system of Claims 11 to 14, wherein the processor is further configured to generate a new charging schedule by the server when changing circumstantial information is detected during charging, and to transmit the new charging schedule to the communication module of the charging cable, the charging cable configured to cause charging of the electric energy storage system according to the new charging schedule; and to receive location data indicative of a location at which the charging cable is coupled to the power source.
